# EUROPÄISCHE PATENTSCHRIFT

(11) **EP 0 495 348 B1**
(45) Veröffentlichungstag und Bekanntmachung des Hinweises auf die Patenterteilung: **20.07.1994**
(21) Anmeldenummer: 91890306.3
(22) Anmeldetag: 16.12.1991
(51) Int. Cl.: C09D 9/00, C11D 7/24

(54) **Mittel zum Entfernen der Oberflächenschutzschicht fabrikneuer Fahrzeuge od.dgl.**
Agent for removing of surface protecting layer of brand-new vehicles or of such kind
Agent pour enlever la couche protectrice de la surface de véhicules neufs sortant de l'usine ou similaires

(30) Priorität: 16.01.1991 AT 79/91
(43) Veröffentlichungstag der Anmeldung: 22.07.1992
(73) Patentinhaber: König, Wolfgang, A-5023 Salzburg (AT)
(72) Erfinder: König, Wolfgang, A-5023 Salzburg (AT)
(74) Vertreter: Hübscher, Heiner, Dipl.-Ing.

(56) Entgegenhaltungen:
- EP-A- 0 376 779
- WO-A-91/06690
- DATABASE WPIL, no. 82-77 447, DERWENT PUBLICATIONS LTD., London, GB; & JP-A-57 125 962

## Beschreibung

Die Erfindung betrifft ein Mittel zum Entfernen der Oberflächenschutzschicht fabriksneuer Fahrzeuge od. dgl..

Die lackierten und metallisch blanken Oberflächen von Kraftfahrzeugen od. dgl. werden, um Beschädigungen bei der Lagerung und dem Transport zu verhindern, vom Hersteller mit einer meist aus Paraffin bestehenden Schutzschicht überzogen, die dann vor der Auslieferung an den Abnehmer wieder entfernt werden muß.

Bisher finden für diesen Zweck aromatische Kohlenwasserstoffe, beispielsweise Petroleum, Dieselöl u. dgl. Anwendung. Nachteilig ist hiebei, da große Mengen von Aromaten in die Luft gelangen, eine starke Geruchsbelästigung sowohl im kalten als auch im heißen Zustand, was eine entsprechende Umweltbelastung mit sich bringt, zumal auch Kohlenwasserstoffe in das Abwasser gelangen. Außerdem ist nachträglich das Trennverhalten des gebrauchten Entfernungsmittels im Abscheider wegen starker Emulsionsbildung ungünstig.

Der Erfindung liegt daher die Aufgabe zugrunde, ein Entfernungsmittel der eingangs geschilderten Art für Schutzschichten aus Paraffin anzugeben, das nicht nur eine gute Lösewirkung aufweist, sondern sich auch durch eine einwandfreie Trennbarkeit vom aufgenommenen Paraffin auszeichnet und vor allem ein umweltfreundliches Produkt darstellt.

Das erfindungsgemäße Mittel zeichnet sich zur Lösung dieser Aufgabe dadurch aus, daß es aus mindestens 92 Vol.% eines isoparaffinischen Kohlenwasserstoffgemisches in einem Bereich von 13 - 15 Kohlenstoffatomen sowie einem Aromatengehalt von max. 0,5 Gew.% und aus höchstens 8 Vol.% Carbonsäureester besteht, wobei dieser Mischung vorzugsweise ein Farbstoff zugesetzt ist.

Da es sich praktisch um ein aromatenfreies Mittel handelt, ergibt sich sowohl im kalten als auch im erhitzten Zustand bis 80°C Geruchlosigkeit. Durch den Zusatz von Carbonsäureester wird eine besonders gute Lösewirkung auf Paraffin erreicht, wie Versuche eindeutig gezeigt haben. Dazu kommt noch ein gutes Trennverhalten im Abscheider, so daß sich das Mittel nach der Abtrennung von Paraffin und Wasser wieder verwenden läßt. Der Farbstoff, der nur in ganz geringen Mengen zugesetzt wird und physiologisch unbedenklich sein soll, dient nur zur Kennzeichnung des Mittels bzw. zu seiner Unterscheidung von anderen Flüssigkeiten. Um auf die Umweltfreundlichkeit des erfindungsgemäßen Mittels hinzuweisen, ist es zweckmäßig, einen grünen Farbstoff zu wählen.

## Patentansprüche

1. Mittel zum Entfernen der Oberflächenschutzschicht fabriksneuer Fahrzeuge od. dgl., dadurch gekennzeichnet, daß es aus mindestens 92 Vol.% eines isoparaffinischen Kohlenwasserstoffgemisches in einem Bereich von 13 - 15 Kohlenstoffatomen sowie einem Aromatengehalt von maximal 0.5 Gew.% und aus höchstens 8 Vol.% Carbonsäureester besteht, wobei dieser Mischung vorzugsweise ein Farbstoff zugesetzt ist.

## Claims

1. An agent for the removal of the surface protective coating of factory-fresh vehicles or the like, characterised in that it consists of at least 92% by volume of an iso-paraffinic hydrocarbon mixture in a range from 13 to 15 carbon atoms and an aromatic content of 0.5% by weight maximum, and of 8% by volume maximum of carboxylic acid ester, a dye preferably being added to this mixture.

## Revendications

1. Produit pour éliminer la couche de protection de la surface extérieure de véhicules neufs ou analogues,
caractérisé en ce qu'il est constitué par au moins 92 % en volume d'un mélange d'hydrocarbures iso-paraffiniques comprenant de 13 à 15 atomes de carbone, ainsi que par une proportion de fractions aromatiques de 0,5 % en poids au maximum et par au plus 8 % en volume d'esters d'acides carboxyliques, un colorant étant de préférence ajouté à ce mélange.
